# EUROPÄISCHE PATENTSCHRIFT

(11) **EP 1 474 315 B1**
(45) Veröffentlichungstag und Bekanntmachung des Hinweises auf die Patenterteilung: **22.03.2006**
(21) Anmeldenummer: 02781104.1
(22) Anmeldetag: 23.09.2002
(51) Int. Cl.: B60R 21/01

(54) **VORRICHTUNG ZUR ÜBERROLLERKENNUNG**
DEVICE FOR IDENTIFYING THE RISK OF A ROLLOVER
DISPOSITIF DE RECONNAISSANCE D'UN RISQUE DE RENVERSEMENT

(30) Priorität: 01.02.2002 DE 10204128
(43) Veröffentlichungstag der Anmeldung: 10.11.2004
(73) Patentinhaber: ROBERT BOSCH GMBH, 70442 Stuttgart (DE)
(72) Erfinder: MATTES, Bernhard, 74343 Sachsenheim (DE); HERRMANN, Thomas, 74613 Oehringen (DE)
(86) Internationale Anmeldenummer: PCT/DE2002/003568
(87) Internationale Veröffentlichungsnummer: WO 2003/064216

(56) Entgegenhaltungen:
- WO-A-01/79036
- WO-A-99/05004
- DE-A- 19 822 184
- DE-A- 19 962 491

## Beschreibung

### Stand der Technik

Die Erfindung geht aus von einer Vorrichtung zur Überrollerkennung nach der Gattung des unabhängigen Patentanspruchs. DE-A-19822184, die als nächstliegender Stand der Technik betrachtet wird, zeigt eine Vorrichtung zur Übervollerhennung, wobei die Vorrichtung im Fahrzeug angeordnet ist und der Überrollsensor als Abstandssensor mit vertikaler Auflösung ausgebildet ist.

### Vorteile der Erfindung

Die erfindungsgemäße Vorrichtung zur Überrollerkennung mit den Merkmalen des unabhängigen Patentanspruchs hat den Vorteil, daß die Überrollerkennung mittels einer Stereo-Kamera auch bei einem Überschlag in der Luft funktioniert und daß eine Kamera für einen anderen Zweck, beispielsweise für Nightvision, Verkehrszeichenerkennung, Fahrspur-, Fahrspurverlassenswarner und/oder Fahrbahnverlaufserkennung oder Precrash-Sensierung, zusätzlich zur Überschlagerkennung genutzt werden kann. Eine Stereo-Kamera hat insbesondere den Vorteil, daß mit ihr eine Abstandsbestimmung durch eine Triangulation zu einem Objekt vorgenommen werden kann.

Durch die in den abhängigen Ansprüchen aufgeführten Maßnahmen und Weiterbildungen sind vorteilhafte Verbesserungen der im unabhängigen Patentanspruch angegebenen Vorrichtung zur Überrollerkennung möglich.

Besonders vorteilhaft ist, daß die Stereo- Kamera in Fahrtrichtung angeordnet ist und daß dann der Prozessor in Abhängigkeit von der zeitlichen Änderung der vertikalen Komponenten eines Bildvektors einen Überrollvorgang um die Fahrzeugquerachse erkennt. Diese Fahrzeugquerachse oder y-Achse oder auch Nickachse wird im allgemeinen noch nicht sensiert.

Weiterhin ist es von Vorteil, daß der Prozessor, der mit der Stereo-Kamera verbunden ist, die zeitliche Änderung der vertikalen Komponenten der Bildvektoren von Abtastpunkt zu Abtastpunkt ermittelt. Im allgemeinen wird hier eine Abtastrate von ungefähr 40 ms verwendet. Für Rollover-Vorgänge, die relativ langsam sind, ist eine solche Abtastrate ausreichend schnell.

Weiterhin ist es von Vorteil, daß der Prozessor aus der zeitlichen Änderung der vertikalen Komponenten die Rollgeschwindigkeit und/oder den Rollwinkel ermittelt. Die überrollvorgangsrelevanten Werte liegen zwischen mindestens 10° Rollwinkel in 500 ms und maximal etwas über 10° Rollwinkel in 40 ms.

### Zeichnung

Ausführungsbeispiele der Erfindung sind in der Zeichnung dargestellt und werden in der nachfolgenden Beschreibung näher erläutert. Es zeigen Figur 1 ein Blockschaltbild der erfindungsgemäßen Vorrichtung, Figur 2 eine Objektbeobachtung durch die Bildsensoren und Figur 3 ein Flußdiagramm, das den Ablauf auf dem Prozessor der erfindungsgemäßen Vorrichtung darstellt.

### Beschreibung

Unter Überroll- oder Rollover-Vorgängen versteht man das Überschlagen eines Fahrzeugs um seine Längsachse oder seine Querachse. Die Längsachse wird auch als Rollachse bezeichnet, während die Querachse auch als Nickachse (pitch axis) bezeichnet wird.

Rollover-Situationen werden im allgemeinen mit Inertial- und Gravitationssensoren sensiert, d.h. mit x-Drehratensensoren und y- und z-Low-g-Beschleunigungsplausibilitätssensoren oder nur mit einfacheren mechanischen Sensoren, die nach dem Prinzip eines mit einer Magnetkraft vorgespannten Pendels arbeiten. Will man auch Pitchover-Situationen erfassen, wäre ein zusätzlicher y-Drehraten- und ein x-Low-g-Beschleunigungssensor notwendig. Überschlagvorgänge kommen jedoch in ca. 23% der Unfälle vor und führen zu ca. 6% der tödlich verletzten Fahrzeuginsassen.

Wenn ein Fahrzeug in der Luft, d.h. nach Bodenkontaktverlust aller Räder, überrollt (airborne rollover), ist bei den heutigen Sensierungskonzepten die Plausibilitätskontrolle durch die Low-g-Beschleunigungsplausibilitätssensoren physikalisch wegen fehlender Gravitation fehlerbehaftet. Man hat dies jedoch akzeptiert, da die Corioliskraft messenden Drehratensensoren auch in der Luft richtig funktionieren. Mechanische Sensoren funktionieren jedoch nur, solange das Fahrzeug Bodenkontakt aufweist. Erfindungsgemäß wird nun mit einer Stereo-Kamera, die zwei Bildsensoren aufweist, eine Überrollsensierung möglich, die ebenso unabhängig vom Bodenkontakt ist. Solch eine Stereo-Videokamera, die nach außen schaut, ist beispielsweise in einem Fahrzeug bereits für Nightvision, Verkehrszeichenerkennung, Fahrspur- bzw. Fahrspurverlassenswarner, Fahrbahnverlaufserkennung, einer Objektklassifizierung, einer relativen Abstands-, Geschwindigkeits- und Precrash-Sensierung vorhanden. Solch eine Kamera kann zusätzlich nun zur Überrollerkennung verwendet werden.

Die Stereo-Kamera mißt Abstände von ca. 4 m bis 40 m durch die sogenannte Triangulation. Triangulation beschreibt eine Methode des Aufteilens eines Gebiets in kleinere Gebiete und zwar in Dreiecke, die miteinander verbunden sind. Durch Winkelbestimmung ist dann die Entfernungsmessung möglich. Die Stereo-Kamera weist einen Öffnungswinkel in vertikaler Richtung von ca. 17° auf und eine Abtastrate von 40 ms. Die Stereo-Kamera weist zwei Bildsensoren auf, die synchron ausgewertet werden, wobei ein Bildvektor für ein Objekt in beispielsweise 20 m Abstand bestimmt wird. Die vektorielle Änderung zwischen den Einzelbildern wird zur Bestimmung des Überrollvorgangs verwendet. Ändern sich nämlich die vertikalen Komponenten der Bildvektoren der beiden Bildsensoren von einem Abtastvorgang zum nächsten für die gleichen Abtastpunkte zu unterschiedlich, so liegt ein Überrollvorgang vor. Es findet demnach ein Schwellwertvergleich statt. Auch der Schwellwertvergleich der Änderung der vertikalen Komponente eines Bildvektors von einem Bildsensor kann bereits zur Erkennung eines Überrollvorgangs verwendet werden. Zusätzlich kann man Rotationsinformationen aus den Bildvektoren ableiten und daraus die Rollgeschwindigkeit und den akkumulierten Rollwinkel berechnen. Die überrollvorgangsrelevanten Werte liegen zwischen mindestens 10° Rollwinkel in 500 ms und maximal ≥ 10° Rollwinkel in 40 ms.

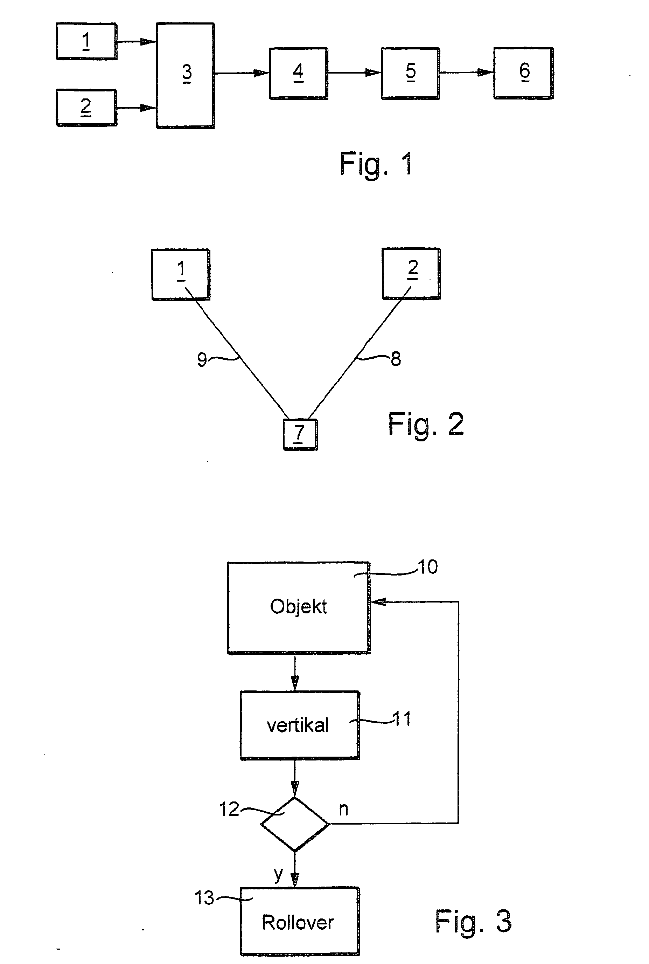

Figur 1 zeigt als Blockschaltbild die erfindungsgemäße Vorrichtung. Bildsensoren 1 und 2 sind an eine Elektronik 3 angeschlossen, die die Bildsensorsignale verstärkt, digitalisiert und eine Vorauswertung gegebenenfalls durchführt. Die Bildsensoren 1 und 2 sowie die Elektronik 3 bilden zusammen die Stereo-Kamera. Als Bildsensoren 1 und 2 können CMOS-Kameras verwendet werden, aber auch andere, beispielsweise Infrarot-Bildaufnehmer, sind hier möglich. Die Bildsensoren können auch jeweils eine eigene Elektronik aufweisen. Die Elektronik 3 ist an einen Prozessor 4 angeschlossen. Diese Verbindung kann über eine Zweidrahtleitung, über eine Funkverbindung oder wie hier über einen Bus geschehen. Der Prozessor 4 führt die Auswertung der Bildsensorsignale durch und bestimmt den Bildvektor und die Änderung der Bildvektoren in Abhängigkeit von der Zeit. Daraus bestimmt der Prozessor dann, ob ein Überrollvorgang vorliegt und wenn ja, die Rollgeschwindigkeit und den akkumulierten Rollwinkel. Hat der Prozessor 4 einen solchen Überrollvorgang erkannt, dann überträgt der Prozessor 4 zu einem Steuergerät 5 für Rückhaltemittel, entweder über eine Zweidrahtleitung oder über einen Bus, diese Information, so daß das Steuergerät 5 in Abhängigkeit von diesem Überrollvorgang und gegebenenfalls anderen Sensorwerten Rückhaltemittel 6 ansteuern kann. Unter solchen Rückhaltemitteln 6 sind Gurtstraffer und Airbags zu verstehen.

Figur 2 zeigt, wie die Bildsensoren 1 und 2 ein Objekt 7 erkennen. Es werden jeweils Vektoren 9 und 8 von den Bildsensoren 1 und 2 zu dem Objekt 7 durch den Prozessor 4 berechnet. Ändert sich nun bei diesen Vektoren 9 und 8 die vertikale Komponente, also in z-Richtung, unterschiedlich, dann ist von einem Überrollvorgang auszugehen, da bei einem Überrollvorgang um die Fahrzeugquerachse die z-Komponente sich stark ändern wird.

Figur 3 zeigt in einem Flußdiagramm das Verfahren, das auf dem Prozessor 4 abläuft. In Verfahrensschritt 10 wird mit Hilfe der Bildsensoren 1 und 2 und der Elektronik 3 ein Objekt identifiziert, und der Prozessor 4 berechnet die Vektoren 9 und 8 zu diesem Objekt 7. Im Verfahrensschritt 11 ermittelt der Prozessor 4 die vertikale Komponente und vergleicht diese entweder direkt mit einem Schwellwert oder mit dem vorhergehenden vertikalen Abschnitt und dann die Differenz zwischen diesen mit einem vorgegebenen Schwellwert. In Verfahrensschritt 12 wird dann überprüft, ob der Schwellwert überschritten wurde oder nicht. Ist das nicht der Fall, wird zu Verfahrensschritt 10 zurückgesprungen, ist das der Fall, dann wird in Verfahrensschritt 13 der Rollover erkannt und dies dem Steuergerät 5 mitgeteilt.

## Patentansprüche

1. Vorrichtung zur Überrollerkennung, wobei die Vorrichtung in einem Fahrzeug angeordnet ist und eine Stereo-Kamera mit zwei Bildsensoren (1, 2) aufweist, die eine Abstandsmessung zu einem Objekt durchführt und einen Bildvektor (9, 8) für jeden Bildsensor (1, 2) erzeugt, wobei die Stereo-Kamera mit einem Prozessor (4) verbunden ist, der aus der zeitlichen Änderung von vertikalen Komponenten der Bildvektoren (9, 8) einen Überrollvorgang erkennt.

2. Vorrichtung nach Anspruch 1, **dadurch gekennzeichnet, daß** die Stereo-Kamera in Fahrtrichtung angeordnet ist und daß dann der Prozessor in Abhängigkeit von der zeitlichen Änderung der vertikalen Komponenten einen Überrollvorgang um die Fahrzeugquerachse erkennt.

3. Vorrichtung nach Anspruch 1 oder 2, **dadurch gekennzeichnet, daß** der Prozessor (4) die zeitliche Änderung von Abtastpunkt zu Abtastpunkt ermittelt.

4. Vorrichtung nach Anspruch 1, 2 oder 3, **dadurch gekennzeichnet, daß** der Prozessor (4) aus der zeitlichen Änderung die Rollgeschwindigkeit und/oder den Rollwinkel ermittelt.

## Claims

1. Apparatus for rollover identification, the apparatus being arranged in a vehicle and having a stereo camera with two image sensors (1, 2), which measures the distance to an object and produces an image vector (9, 8) for each image sensor (1, 2), with the stereo camera being connected to a processor (4) which uses the rate of change of vertical components of the image vectors (9, 8) to identify a rollover process.

2. Apparatus according to Claim 1, **characterized in that** the stereo camera is arranged in the direction of travel, and **in that** the processor then identifies a rollover process about the vehicle lateral axis as a function of the rate of change of the vertical components.

3. Apparatus according to Claim 1 or 2, **characterized in that** the processor (4) determines the rate of change from one sample point to the next.

4. Apparatus according to Claim 1, 2 or 3, **characterized in that** the processor (4) uses the rate of change to determine the roll rate and/or the roll angle.

## Revendications

1. Dispositif de reconnaissance de renversement, installé dans un véhicule et équipé d'un appareil de photo stéréo à deux capteurs d'images (1, 2), qui mesure la distance jusqu'à un objet et produit un vecteur d'images (9, 8) pour chaque capteur d'images (1, 2), l'appareil de photo stéréo étant relié à un processeur (4) qui reconnaît un processus de renversement à partir de variations dans le temps des composantes verticales des vecteurs d'images (9, 8).

2. Dispositif selon la revendication 1,
**caractérisé en ce que**
l'appareil de photo stéréo est placé dans le sens de conduite et le processeur reconnaît alors un processus de renversement autour de l'axe transversal du véhicule en fonction des variations dans le temps des composantes verticales.

3. Dispositif selon la revendication 1 ou 2,
**caractérisé en ce que**
le processeur (4) détermine la variation dans le temps d'un point de balayage à un autre.

4. Dispositif selon la revendication 1, 2 ou 3,
**caractérisé en ce que**
le processeur (4) détermine la vitesse de roulis et/ou l'angle de roulis à partir de la variation dans le temps.
